# NEUE EUROPÄISCHE PATENTSCHRIFT

(11) **EP 3 122 583 B2**
(45) Veröffentlichungstag und Bekanntmachung des Hinweises auf die Entscheidung über den Einspruch: **10.11.2021**
(45) Hinweis auf die Patenterteilung: 17.10.2018
(21) Anmeldenummer: 15711760.7
(22) Anmeldetag: 24.03.2015
(51) Int. Cl.: B60J 3/04, H02G 11/00, H05B 3/84

(54) **ELEKTRISCH SCHALTBARE KRAFTFAHRZEUGVERGLASUNG**
ELECTRICALLY SWITCHABLE MOTOR-VEHICLE GLAZING
VITRAGE DE VÉHICULE AUTOMOBILE À COMMANDE ÉLECTRIQUE

(30) Priorität: 28.03.2014 DE 102014104418
(43) Veröffentlichungstag der Anmeldung: 01.02.2017
(73) Patentinhaber: Küster Holding GmbH, 35630 Ehringshausen (DE)
(72) Erfinder: MÜLLER, Stefan, 35580 Wetzlar (DE); MARCHANT, Robert, Allesley Coventry West Midlands CV5 9DD (GB); SCHMIDT, Andreas, 35606 Solms (DE)
(74) Vertreter: Müller, Eckhard
(86) Internationale Anmeldenummer: PCT/EP2015/056210
(87) Internationale Veröffentlichungsnummer: WO 2015/144678

(56) Entgegenhaltungen:
- EP-A1- 2 567 842
- EP-A1- 2 801 689
- DE-A1- 10 328 929
- DE-A1-102009 037 674
- DE-A1-102010 056 203
- DE-A1-102013 003 533

## Beschreibung

Die Erfindung betrifft eine elektrisch schaltbare Kraftfahrzeugverglasung, beispielsweise eine Seiten- oder Heckscheibe eines Kraftfahrzeuges, sowie eine elektrisch schaltbare Kraftfahrzeugverglasung in Anordnung an einem Mitnehmer oder an einem Antriebs- bzw. Seiltrommelgehäuse eines Kraftfahrzeugfensterhebers zum Öffnen und Schließen der Kraftfahrzeugverglasung, beispielsweise eine Seitenscheibe eines Kraftfahrzeuges, bei der wenigstens eine optische Eigenschaft durch Zuführen eines elektrischen Signals über eine an einem Scheibenhalter der Kraftfahrzeugverglasung angeordneten Leitung veränderbar ist.

Elektrisch schaltbare Verglasungen der eingangs genannten Art verändern ihre optische Eigenschaft, beispielweise die Lichtdurchlässigkeit, durch das Anlegen einer elektrischen Spannung bzw. elektrischen Leistung. Je nach Ausführung können solche Verglasungen beispielsweise als Sonnenschutz dienen oder die Funktion eines Sichtschutzes übernehmen. Elektrisch schaltbare Verglasungen können als elektrochromes Glas oder als LC-Glas (Lyquid Crystal), PDLC-Glas (Polymer Dispersed Lyquid Crystal) oder SPD-Glas (Suspended Particle Device) ausgeführt sein.

Derartige elektrisch schaltbare Verglasungen werden beispielsweise in der Gebäudeverglasung zur Temperaturregulierung oder als UV-Schutz, aber auch im Kraftfahrzeug als Sonnenschutz in Dachfenstern, beispielsweise in Panoramadächern, eingesetzt. Zur Steuerung oder Regelung der optischen Eigenschaften solcher elektrisch schaltbaren Verglasungen bedarf es einer separaten elektronischen Steuer- oder Regeleinheit. Bekannt ist aber auch, dass eines der im Kraftfahrzeug vorhandenen Steuergeräte, beispielsweise ein Türsteuergerät, die Aufgabe der Steuerung oder Regelung elektrisch schaltbarer Verglasungen mit übernimmt, wodurch eine separate Steuer- oder Regeleinheit entfällt.

Aus der DE 103 28 929 A1 ist eine Vorrichtung mit einem elektronischen, sensorgesteuerten Einklemmschutz-System bekannt, welches auf Fensterheber-Einrichtungen an Kraftfahrzeugen einwirkt. Die Vorrichtung weist einen Antriebsmotor auf, welcher eine Fensterheber-Einrichtung in Abhängigkeit von Steuersignalen einer Steuerelektronik verfährt. Die Fensterheber-Einrichtung weist eine Sensor-Elektrode, welche in der Nähe des Schließ- und Öffnungsrandes einer Fensterscheibe angeordnet ist, und eine Auswerteelektronik auf. Die Auswerteelektronik und/oder die Steuerelektronik sind dabei in oder an dem Mitnehmer positioniert.

Aus der WO 2003/026104 A2 ist ferner eine Antriebseinheit für Verstelleinrichtungen in Kraftfahrzeugen, beispielsweise Fensterheber-Einrichtungen, bekannt, welche einen Elektromotor, eine den Elektromotor speisende Stromversorgungseinrichtung, mindestens ein mit dem Elektromotor verbundenes Getriebe und eine Elektronik aufweist. Die Elektronik und die Stromversorgungseinrichtung sind dabei im Gehäuse des Elektromotors integriert und führen sowohl Steuer- und Regelfunktionen des Elektromotors als auch Steuer-, Regel- und Überwachungsfunktionen der Verstelleinrichtungen aus.

Aus der DE 10 2013 003 533 A1 ist eine Vorrichtung zur elektrischen Kontaktierung einer elektrisch ansteuerbaren Funktionsschicht einer mittels eines Scheibenmitnehmers verstellbaren Fahrzeugscheibe bekannt. Der Scheibenmitnehmer weist mindestens zwei erste Kontaktelemente zur Übertragung von Steuersignalen auf die Funktionsschicht auf, mittels derer die Funktionsschicht mit der Vorrichtung kontaktiert wird, um die Transparenz der Funktionsschicht durch Anlegen eines elektrischen Feldes zu verändern. Der Scheibenmitnehmer ist Y-förmig ausgebildet und umgreift die Scheibe von zwei gegenüberliegenden Seiten, wobei ein erster Y-Arm starr und ein zweiter Y-Arm über ein Scharnier beweglich mit dem Gehäuse verbunden ist. Eine Steuerelektronik ist in einem Gehäuse des Scheibenmitnehmers angeordnet.

Aus der DE 10 2010 056 203 A1 ist eine Vorrichtung zum Einstellen des Transmissionsgrades von Glasflächen durch Anlegen einer Betriebsspannung bekannt. Die Vorrichtung weist zumindest eine Übertragungsleitung und zumindest einen Wandler mit integrierter Zentraleinheit zur Umwandlung einer Quellenspannung auf. Zur Steuerung der Spannung und/oder der Frequenz einer Wechselspannung ist in den Wandler die Zentraleinheit integriert. Der Wandler und die Zentraleinheit sind in einem Metallgehäuse angeordnet.

Aus der US 2013/0050797 A1 und der EP 2 567 842 A1 ist eine Vorrichtung für eine Steuerung einer elektrisch ansteuerbaren Funktionsschicht von Kraftfahrzeugfensterscheiben bekannt. Der Transmissionsgrad der Funktionsschicht wird durch Anlegen einer elektrischen Spannung an die Funktionsschicht eingestellt. Ein Wechselrichter richtet eine Gleichspannung der Fahrzeugbatterie in eine Wechselspannung zum Ansteuern der Funktionsschicht um. Dieser Wechselrichter ist am unteren Teil der Glasscheibe angeordnet, um den Schwerpunkt der Scheibe nach unten zu verlagern und damit ein leichtgängiges Verfahren der Scheibe zu gewährleisten. Am Wechselrichter ist eine Bewegungsvorrichtung zum Auf- und Abbewegen der Glasscheibe vorgesehen.

Aus der DE 10 2009 037 674 A1 ist eine Fensterheberbaugruppe für ein Kraftfahrzeug mit einer verstellbaren Fensterscheibe und mit mindestens einem mit der verstellbaren Fensterscheibe gekoppeltem Kabel bekannt. Das Kabel wird bei einer Verstellung der Fensterscheibe bewegt, so dass sich der Verlauf des Kabels ändert. Ein Fahrzeugelement, das nicht mit der Fensterscheibe bewegbar ist, steht mit dem Kabel an einer Kabelanbindungsstelle in Verbindung. Weiter weist die Fensterheberbaugruppe wenigstens ein flexibles Führungselement zwischen der Fensterscheibe und der Kabelanbindungsstelle des Fahrzeugelements auf, an der das mit der Fensterscheibe gekoppelte Kabel, vorzugsweise das Kabel einer Stromquelle und/oder einer Regelungselektronik, mit dem unbeweglichen Fahrzeugelement in Verbindung steht. Das flexible Führungselement, an dem das Kabel geführt ist, gibt dabei bei Verstellung der Fensterscheibe, zumindest abschnittsweise den Verlauf des Kabels vor. Die Kopplung des Führungselements mit der Fensterscheibe erfolgt über die Verbindung des Führungselementes mit einem Mitnehmer, der mit der Fensterscheibe verbunden ist.

Aus der EP 2 801 689 A1 ist eine Fensterhebevorrichtung zum Anheben und Absenken einer Fensterscheibe für ein Kraftfahrzeug bekannt. Eine stromführende Leitung ist mit einem ersten Ende ortsfest bezüglich der Fahrzeugkarosserie angeordnet. Mit ihrem zweiten Ende ist die Leitung ortsfest bezüglich eines Mitnehmers angebracht.

Davon ausgehend liegt der Erfindung die Aufgabe zugrunde, bei einer elektrisch schaltbaren Kraftfahrzeugverglasung eine Steuer- oder Regeleinheit im Bereich der Kraftfahrzeugverglasung anzuordnen, um die Störanfälligkeit der Signale zum Steuern oder Regeln der optischen Eigenschaften der Kraftfahrzeugverglasung zu minimieren.

Die Aufgabe wird gelöst durch eine elektrisch schaltbare Kraftfahrzeugverglasung nach Anspruch 1. Weitere Ausgestaltungen der Erfindung sind Gegenstand von Unteransprüchen.

Bei einer elektrisch schaltbaren Kraftfahrzeugverglasung, beispielsweise einer Seiten- oder Heckscheibe eines Kraftfahrzeuges, bei der wenigstens eine optische Eigenschaft durch Zuführen eines elektrischen Signals über eine an einem Scheibenhalter der Kraftfahrzeugverglasung angeordneten Leitung veränderbar ist, ist in einem Gehäuse, das ortsfest bezüglich einer Kraftfahrzeugkarosserie angeordnet ist, eine Steuer- oder Regeleinheit zum Zuführen des elektrischen Signals vorgesehen. An der Steuer- oder Regeleinheit, welche sich in dem Gehäuse befindet, ist die Leitung zum Zuführen des elektrischen Signals, beispielsweise über einen Stecker, angeordnet. Das elektrische Signal kann dabei eine elektrische Spannung, ein elektrischer Strom, eine elektrische Leistung oder auch ein analoges oder digitales Signal, beispielsweise ein Datensignal, sein. Vorzugsweise ist das Gehäuse und somit auch die Steuer- oder Regeleinheit im Bereich bzw. in der Nähe der elektrisch schaltbaren Kraftfahrzeugverglasung angeordnet. Die Länge der Leitung wird dadurch ebenfalls minimiert, wodurch in vorteilhafter Weise auch die Störanfälligkeit der Signale auf der Leitung, beispielsweise elektrische Spannungen, zum Steuern oder Regeln der optischen Eigenschaften der Kraftfahrzeugverglasung minimiert werden.

Erfindungsgemäß ist das Gehäuse am Antriebs- bzw. Seiltrommelgehäuse eines Kraftfahrzeugfensterhebers zum Öffnen und Schließen der Kraftfahrzeugverglasung angeordnet.

Gemäß der Erfindung ist das Gehäuse einstückig am Antriebs- bzw. Seiltrommelgehäuse des Kraftfahrzeugfensterhebers zur Aufnahme der Steuer- oder Regeleinheit angeformt. Dadurch sind an dem Gehäuse keine weiteren Befestigungsvorrichtungen, wie beispielsweise Befestigungslaschen oder ein Befestigungsfortsatz oder dergleichen, notwendig.

Nach einem weiteren unabhängigen Gedanken der Erfindung ist bei einer elektrisch schaltbaren Kraftfahrzeugverglasung in Anordnung an einem Mitnehmer eines Kraftfahrzeugfensterhebers zum Öffnen und Schließen der Kraftfahrzeugverglasung, beispielsweise einer Seitenscheibe eines Kraftfahrzeuges, bei der wenigstens eine optische Eigenschaft durch Zuführen eines elektrischen Signals über eine an einem Scheibenhalter der Kraftfahrzeugverglasung angeordneten Leitung veränderbar ist, in einem Gehäuse, das an dem Mitnehmer angeordnet ist, eine Steuer- oder Regeleinheit zum Zuführen des elektrischen Signals vorgesehen. An der Steuer- oder Regeleinheit, welche sich in dem Gehäuse befindet, ist die Leitung zum Zuführen des elektrischen Signals, beispielsweise über einen Stecker, angeordnet. Das elektrische Signal kann dabei eine elektrische Spannung, ein elektrischer Strom, eine elektrische Leistung oder auch ein analoges oder digitales Signal, beispielsweise ein Datensignal, sein. Dadurch, dass das Gehäuse und somit auch die Steuer- und Regeleinheit am Mitnehmer des Kraftfahrzeugsfensterhebers angeordnet sind, minimiert sich die Länge der Leitung zum, vorzugsweise ebenfalls an dem Mitnehmer angeordneten, Scheibenmitnehmer erheblich. In vorteilhafter Weise wird dadurch auch die Störanfälligkeit der Signale auf der Leitung, beispielsweise elektrische Spannungen, zum Steuern oder Regeln der optischen Eigenschaften der Kraftfahrzeugverglasung minimiert. Erfindungsgemäß ist das Gehäuse einstückig am Mitnehmer des Kraftfahrzeugfensterhebers zur Aufnahme der Steuer- oder Regeleinheit angeformt. Dadurch sind an dem Gehäuse keine weiteren Befestigungsvorrichtungen, wie beispielsweise ein Befestigungsfortsatz oder dergleichen, notwendig.

Vorteilhafterweise ist an der Außenwandung des Gehäuses mindestens ein Befestigungsfortsatz angeordnet. Das Gehäuse mitsamt der darin angeordneten Steuer- oder Regeleinheit kann dadurch in einfacher Weise am Mitnehmer des Kraftfahrzeugfensterhebers befestigt werden.

Vorteilhafterweise ist der mindestens eine Befestigungsfortsatz einstückig am Gehäuse angeformt und greift in mindestens eine an den Befestigungsfortsatz angepasste Aufnahme mit entsprechender Innenkontur, welche an dem Mitnehmer einstückig angeformt ist, ein. Der am Gehäuse einstückig angeformte Befestigungsfortsatz kann dazu unterschiedlich ausgeformt sein, beispielsweise zylinderförmig, rechteckig, ellipsenförmig oder dergleichen. Dadurch, dass der mindestens eine am Gehäuse einstückig angeformte Befestigungsfortsatz in seinem Querschnitt eine eckige oder auch längliche Ausformung aufweist, ist das Gehäuse in Bezug auf den Mitnehmer verdrehsicher angeordnet. Die Anordnung von zwei oder mehreren einstückig am Gehäuse angeformten Befestigungsfortsätzen würde ebenfalls eine Verdrehung des Gehäuses gegenüber dem Mitnehmer verhindern.

Nach einer vorteilhaften Ausgestaltung ist der mindestens eine Befestigungsfortsatz mit der mindestens einen Aufnahme verpresst, verklebt, verclipst oder verschweißt. Eine praktische, günstige und auch montagefreundliche Befestigungsvariante ist dabei die gemeinsame Verclipsung des Gehäuses mit dem Mitnehmer. Dadurch ist ein Austauschen des Gehäuses mitsamt der Steuer- oder Regeleinheit im montierten Zustand leicht realisierbar. Die Montage oder der Austausch des Gehäuses mitsamt der Steuer- oder Regeleinheit kann somit von Hand erfolgen, ohne ein Werkzeug oder ein weiteres Hilfsmittel zu verwenden.

Nach einem weiteren unabhängigen, aber nicht beanspruchten, Gedanken ist bei einer elektrisch schaltbaren Kraftfahrzeugverglasung in Anordnung an einem Antriebs- bzw. Seiltrommelgehäuse eines Kraftfahrzeugfensterhebers zum Öffnen und Schließen der Kraftfahrzeugverglasung, beispielsweise einer Seitenscheibe eines Kraftfahrzeuges, bei der wenigstens eine optische Eigenschaft durch Zuführen eines elektrischen Signals über eine an einem Scheibenhalter der Kraftfahrzeugverglasung angeordneten Leitung veränderbar ist, in einem Gehäuse, das an dem Antriebs- bzw. Seiltrommelgehäuse angeordnet ist, eine Steuer- oder Regeleinheit zum Zuführen des elektrischen Signals vorgesehen. An der Steuer- oder Regeleinheit, welche sich in dem Gehäuse befindet, ist die Leitung zum Zuführen des elektrischen Signals, beispielsweise über einen Stecker, angeordnet. Das elektrische Signal kann dabei eine elektrische Spannung, ein elektrischer Strom, eine elektrische Leistung oder auch ein analoges oder digitales Signal, beispielsweise ein Datensignal, sein. Dadurch, dass das Gehäuse und somit auch die Steuer- und Regeleinheit am Antriebs- bzw. Seiltrommelgehäuse des Kraftfahrzeugsfensterhebers angeordnet sind, minimiert sich die Länge der Leitung zum Scheibenmitnehmer deutlich. In vorteilhafter Weise wird dadurch auch die Störanfälligkeit der Signale auf der Leitung, beispielsweise elektrische Spannungen, zum Steuern oder Regeln der optischen Eigenschaften der Kraftfahrzeugverglasung minimiert.

Gemäß der Erfindung ist das Gehäuse einstückig am Antriebs- bzw. Seiltrommelgehäuse des Kraftfahrzeugfensterhebers zur Aufnahme der Steuer- oder Regeleinheit angeformt. Dadurch sind an dem Gehäuse keine weiteren Befestigungsvorrichtungen, wie beispielsweise ein Befestigungsfortsatz oder dergleichen, notwendig. In vorteilhafter Weise weist das Gehäuse in seinem Inneren mindestens eine Führung zum Einschieben und Halten der Steuer- oder Regeleinheit auf. Dadurch lässt sich die Steuer- oder Regeleinheit einfach und schnell in das Gehäuse einschieben und bietet einen sicheren Halt. Weiterhin ist die Steuer- oder Regeleinheit im Falle eines Defektes sehr leicht auswechselbar. In vorteilhafter Weise ist das Gehäuse im Bereich seiner Öffnung zum Schutz der im Gehäuse angeordneten Steuer- oder Regeleinheit abgedichtet und/oder die Steuer- oder Regeleinheit im Gehäuse eingegossen. Dadurch wird beispielsweise eindringende Feuchtigkeit, welche die Steuer- oder Regeleinheit beschädigen könnte, vermieden. Insbesondere ist dies im Bereich einer Kraftfahrzeugtür notwendig, da dieser Bereich ein Feuchtigkeitsbereich des Kraftfahrzeugs darstellt, d. h. Feuchtigkeit eindringen kann.

In vorteilhafter Weise ist die elektrisch schaltbare Kraftfahrzeugverglasung durch Zuführen eines elektrischen Signals, vorzugsweise einer elektrischen Leistung, über die an dem Scheibenhalter der Kraftfahrzeugverglasung angeordneten Leitung beheizbar. Insbesondere Front- und Heckscheiben eines Kraftfahrzeugs sind heutzutage beheizbar, um diese schnell und einfach von Eis zu befreien.

Die Erfindung wird anhand einiger Ausführungsbeispiele erläutert. Es zeigen:
Fig. 1 eine perspektivische Darstellung einer Gehäuseanordnung an einem Antriebs- bzw. Seiltrommelgehäuse eines Kraftfahrzeugfensterhebers,
Fig. 2 eine perspektivische Darstellung eines Gehäuses, welches an der Fahrzeugkarosserie befestigt ist,
Fig. 3 eine perspektivische Darstellung eines Gehäuses, welches an einer Kraftfahrzeugverglasung angesteckt ist,
Fig. 4 eine perspektivische Darstellung eines an einem Antriebs- bzw. Seiltrommelgehäuse einstückig angeformten Gehäuses,
Fig. 5 eine weitere perspektivische Darstellung der Gehäuseanordnung gemäß Fig. 4 und
Fig. 6 ein Fensterhebersystem mit einem an dem Antriebs- bzw. Seiltrommelgehäuse einstückig angeformten Gehäuse.

Die in den Figuren dargestellten Kraftfahrzeugverglasungen dienen zur weiteren Verdeutlichung des Grundprinzips, wobei gleiche oder gleich wirkende Elemente zumindest mit denselben Bezugszeichen versehen sind.

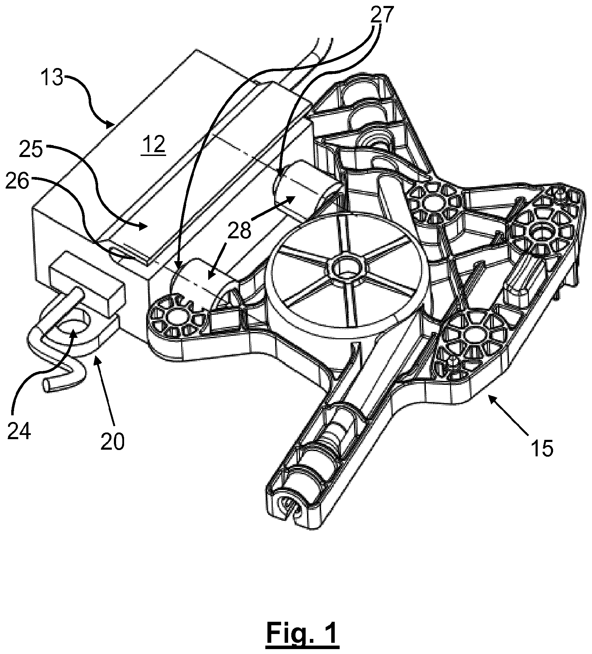

Fig. 1 zeigt ein Antriebs- bzw. Seiltrommelgehäuse 15 eines Kraftfahrzeugfensterhebers mit einem daran angeordneten Gehäuse 12 zur Aufnahme einer Steuer- oder Regeleinheit 11 für eine in dieser Figur nicht dargestellte elektrisch schaltbare Kraftfahrzeugverglasung 1. Die Steuer- oder Regeleinheit 11 ist in dieser Figur ebenfalls nicht dargestellt. Das Gehäuse 12 weist an seiner Außenwandung eine seitliche Befestigungslasche 20 auf, welche wiederum ein Durchgangsloch 24 zur Aufnahme einer Befestigungsschraube oder dergleichen aufweist. Eine derartige Befestigungslasche 20 kann auf der anderen Seite des Gehäuses 12 ebenfalls angeordnet sein.

Weiterhin weist das Gehäuse 12 an seiner Oberseite eine hakenförmig ausgebildete Halterung 25 auf, welche an das Gehäuse 12 angeformt ist. Die hakenförmig ausgebildete Halterung 25 weist dabei einen L-förmig ausgebildeten Schenkel 26 auf. An dem Gehäuse 12 sind an der der Gehäuseöffnung 13 gegenüberliegenden Seite zwei Befestigungsfortsätze 27 einstückig angeformt. Die Befestigungsfortsätze 27 sind gemäß Fig. 1 zylinderförmig ausgebildet und greifen in zwei hohlzylindrische Aufnahmen 28 des Antriebs- bzw. Seiltrommelgehäuses 15 ein. Die Befestigungsfortsätze 27 können dabei mit den hohlzylindrisch ausgeformten Aufnahmen 28 verpresst, verklebt, verclipst oder verschweißt sein.

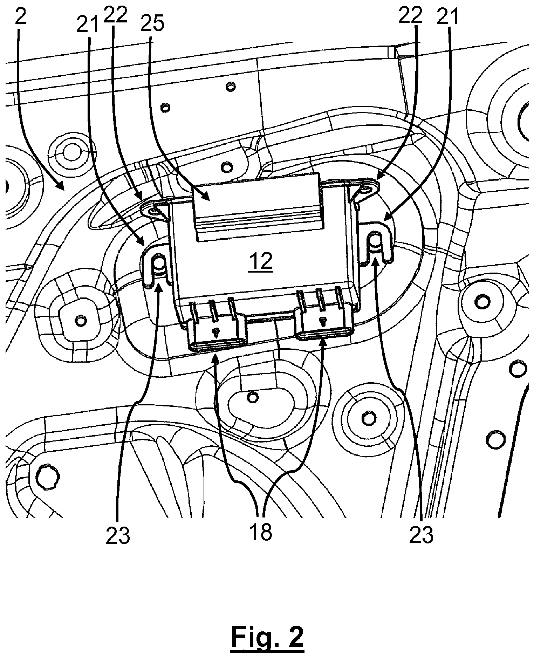

In Fig. 2 ist das Gehäuse 12 über zwei seitlich daran angeordneten Befestigungslaschen 21 an der Fahrzeugkarosserie 2 befestigt. Die Befestigungslaschen 21 weisen dazu eine U-förmige Ausnehmung 23 auf, welche in einem Vorsprung der Fahrzeugkarosserie 2 eingreifen und somit eine einfache Befestigungsmöglichkeit des Gehäuses 12 an der Fahrzeugkarosserie 2 ermöglichen. Das Gehäuse 12 wird demgemäß nicht angeschraubt, sondern in zwei Vorsprünge der Fahrzeugkarosserie 2 eingesteckt und dadurch kraft- und formschlüssig gehalten. Weiterhin weist das Gehäuse 12 zwei weitere, in Bezug auf die Befestigungslaschen 21 senkrecht stehende, Befestigungslaschen 22 auf, wodurch weitere Befestigungsvarianten des Gehäuses 12 an der Fahrzeugkarosserie 2 möglich sind. Auch weist das Gehäuse 12 in seinem oberen Bereich eine hakenförmig ausgebildete Halterung 25 auf, in welche eine feststehend ausgebildete Kraftfahrzeugverglasung 1, beispielsweise eine Front- oder Heckscheibe eines Kraftfahrzeuges, eingesteckt bzw. eingeklebt werden kann. Im unteren Bereich des Gehäuses 12 sind zwei, in ihrem Querschnitt länglich ausgebildete und nebeneinander angeordnete, Stecker- bzw. Buchsengehäuse 18 zur Aufnahme von beispielsweise Steckkontakten der Steuer- oder Regeleinheit 11 einstückig an das Gehäuse 12 angeformt.

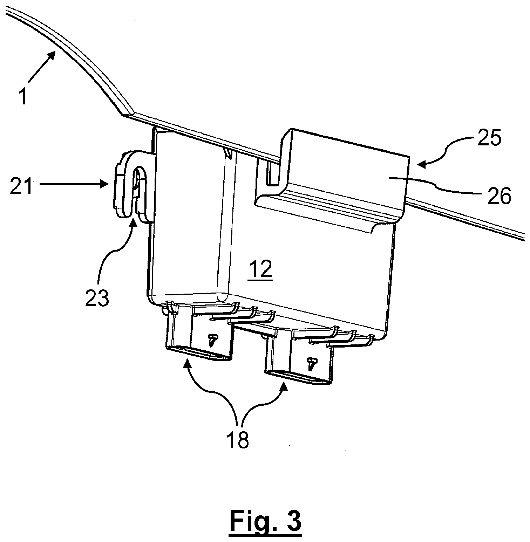

Fig. 3 zeigt eine Kraftfahrzeugverglasung 1, welche in den von der hakenförmig ausgebildeten Halterung 25 umfassten Freiraum des Gehäuses 12 eingesteckt ist. Die Kraftfahrzeugverglasung 1 kann dabei feststehend ausgebildet, beispielsweise eine Front- oder Heckscheibe eines Kraftfahrzeuges, sein. Die hakenförmig ausgebildete Halterung 25 weist dazu einen L-förmig ausgebildeten Schenkel 26 auf, welcher die Kraftfahrzeugverglasung 1 an ihrem unteren Ende umgreift. Die Kraftfahrzeugverglasung 1 wird von der hakenförmig ausgebildeten Halterung 25 bzw. des L-förmig ausgebildeten Schenkels 26 formschlüssig gehalten. Denkbar ist auch, dass die Kraftfahrzeugverglasung 1 in den von der Halterung 25 umfassten Freiraum lediglich eingesteckt oder darin eingeklebt ist. Der L-förmige Schenkel 26 kann dabei auch eine Federkraft aufweisen, sodass die Kraftfahrzeugverglasung 1 kraft- und formschlüssig am Gehäuse 12 gehalten wird. Im unteren Bereich des Gehäuses 12 sind zwei, in ihrem Querschnitt länglich ausgebildete und nebeneinander angeordnete, Stecker- bzw. Buchsengehäuse 18 zur Aufnahme von beispielsweise Steckkontakten der Steuer- oder Regeleinheit 11 einstückig an das Gehäuse 12 angeformt.

Weiterhin weist das Gehäuse 12 an der seitlichen Außenwandung eine Befestigungslasche 21 mit einer U-förmigen Ausnehmung 23 auf. Eine derartige Befestigungslasche 21 kann auf der anderen Seite des Gehäuses 12 ebenfalls angeordnet sein. Durch die seitlichen Befestigungslaschen 21 ist es möglich, das Gehäuse 12 beispielsweise an der Fahrzeugkarosserie zu befestigen. Dabei kann das Gehäuse 12 an einen an der Kraftfahrzeugkarosserie 2 angeordneten Vorsprung eingesteckt werden. Denkbar ist aber auch, das Gehäuse 12 an der Fahrzeugkarosserie 2 anzuschrauben oder anzunieten.

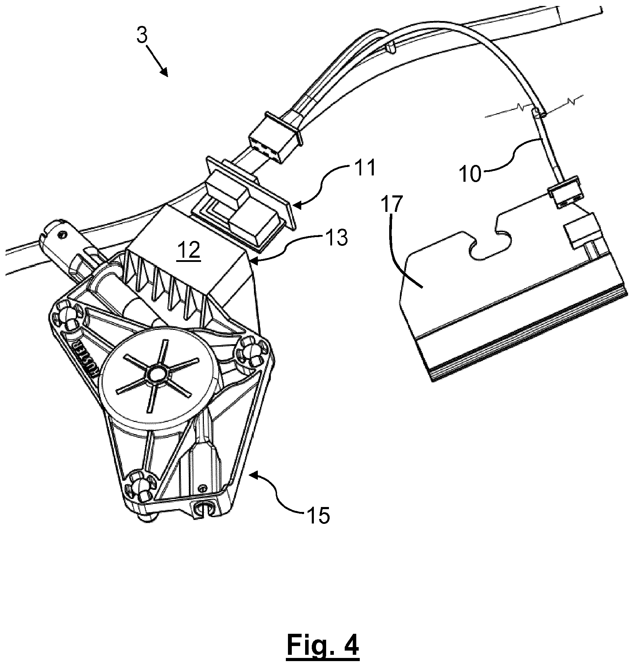

Fig. 4 zeigt ein Fensterhebersystem 3 mit einem Antriebs- bzw. Seiltrommelgehäuse 15 und einem daran einstückig angeformten Gehäuse 12, welches zur Aufnahme der Steuer- oder Regeleinheit 11 ausgebildet ist. Die Steuer- oder Regeleinheit 11 wird dabei durch die Gehäuseöffnung 13 in das Gehäuse 12 eingeschoben. Eine elektrische Verbindung der Steuer- oder Regeleinheit 11 mit dem Scheibenhalter 17 erfolgt dabei durch die Leitung 10. An den Enden der Leitung 10 sind zur einfachen und lösbaren Verbindung der Steuer- oder Regeleinheit 11 mit dem Scheibenhalter 17 Stecker angeordnet, welche mit einem entsprechenden Gegenstecker an der Steuer- oder Regeleinheit 11 und dem Scheibenhalter 17 verbunden werden.

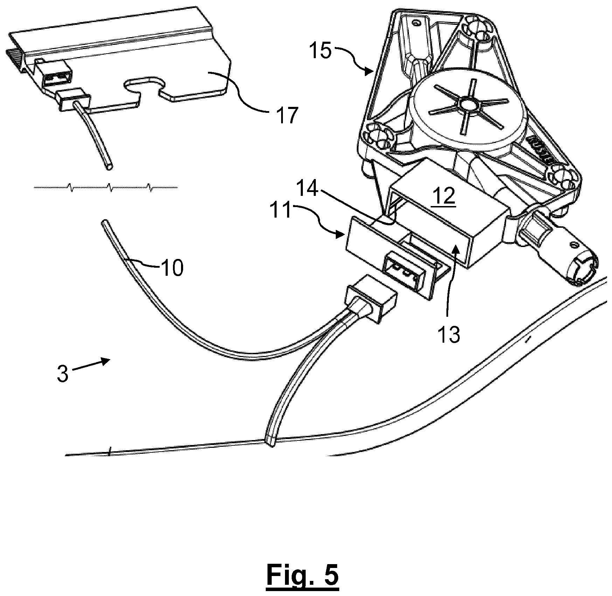

Fig. 5 zeigt das Fensterhebersystem gemäß Fig. 4 aus einer anderen Perspektive. An dem Antriebs- bzw. Seiltrommelgehäuse 15 ist das Gehäuse 12 zur Aufnahme der Steuer-oder Regeleinheit 11 gemäß der Erfindung einstückig angeformt. Innerhalb des Gehäuses 12 sind an den seitlichen Wandungen Führungen 14 zum leichten Einschieben der Steuer- oder Regeleinheit 11 angeformt. Die Steuer- oder Regeleinheit 11 wird dabei durch die Gehäuseöffnung 13 über die Führungen 14 in das Gehäuse 12 eingeschoben. Die elektrische Verbindung zum Scheibenhalter 17 erfolgt dabei über die Leitung 10.

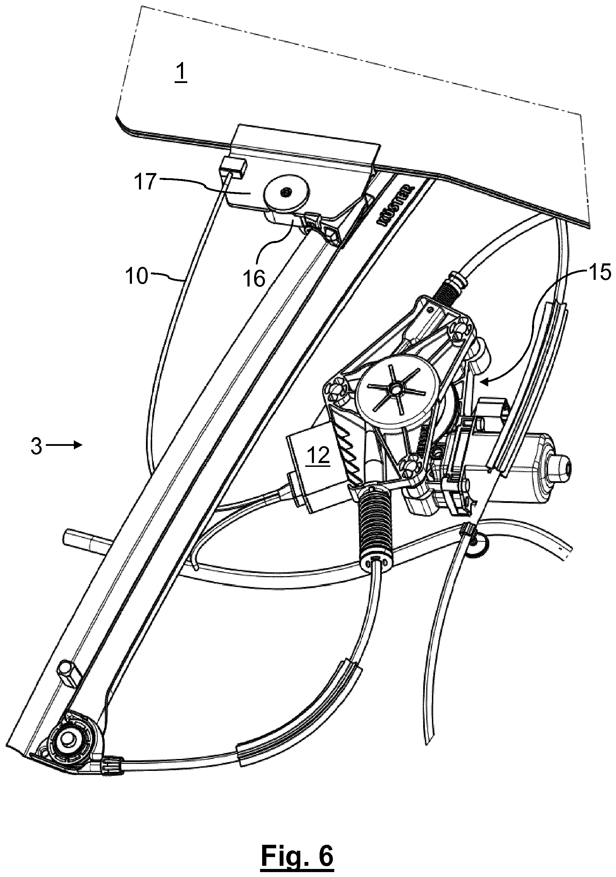

Fig. 6 zeigt ein komplettes Fensterhebersystem mit einem Scheibenhalter 17, in welchem die Kraftfahrzeugverglasung 1 eingesteckt ist. Der Scheibenhalter 17 ist dabei an einem Mitnehmer 16 angeordnet, welcher wiederum beweglich an einer Führungsschiene angeordnet ist. Über die Leitung 10 wird eine elektrische Verbindung vom Scheibenhalter 17 zur elektrischen Steuer- oder Regeleinheit 11 (hier nicht dargestellt), welche sich in dem Gehäuse 12 befindet, hergestellt. Das Gehäuse 12 ist dabei gemäß der Erfindung einstückig an dem Antriebs- bzw. Seiltrommelgehäuse 15 des Fensterhebers 3 angeformt.

### Bezugszeichenliste

1 Kraftfahrzeugverglasung
2 Kraftfahrzeugkarosserie
3 Kraftfahrzeugfensterheber
10 Leitung
11 Steuer- oder Regeleinheit
12 Gehäuse
13 Gehäuseöffnung
14 Führungen
15 Antriebs- bzw. Seiltrommelgehäuse
16 Mitnehmer
17 Scheibenhalter
18 Stecker- bzw. Buchsengehäuse
20 Befestigungslasche
21 Befestigungslasche
22 Befestigungslasche
23 U-förmige Ausnehmung
24 Durchgangsloch
25 Halterung
26 Schenkel
27 Befestigungsfortsatz
28 Aufnahme

## Patentansprüche

1. Elektrisch schaltbare Kraftfahrzeugverglasung (1), beispielsweise eine Seiten- oder Heckscheibe eines Kraftfahrzeuges, bei der wenigstens eine optische Eigenschaft durch Zuführen eines elektrischen Signals über eine an einem Scheibenhalter (17) der Kraftfahrzeugverglasung (1) angeordneten Leitung (10) veränderbar ist, wobei in einem Gehäuse (12), das ortsfest bezüglich einer Kraftfahrzeugkarosserie (2) am Antriebs- bzw. Seiltrommelgehäuse (15) eines Kraftfahrzeugfensterhebers (3) zum Öffnen und Schließen der Kraftfahrzeugverglasung (1) angeordnet ist, eine Steuer- oder Regeleinheit (11) zum Zuführen des elektrischen Signals vorgesehen ist, **dadurch gekennzeichnet, dass** das Gehäuse (12) einstückig am Antriebs- bzw. Seiltrommelgehäuse (15) des Kraftfahrzeugfensterhebers (3) zur Aufnahme der Steuer- oder Regeleinheit (11) angeformt ist.

2. Elektrisch schaltbare Kraftfahrzeugverglasung (1) nach Anspruch 1, **dadurch gekennzeichnet, dass** das Gehäuse (12) in seinem Inneren mindestens eine Führung (14) zum Einschieben und Halten der Steuer- oder Regeleinheit (11) aufweist.

3. Elektrisch schaltbare Kraftfahrzeugverglasung (1) nach Anspruch 1 oder 2, **dadurch gekennzeichnet, dass** das Gehäuse (12) im Bereich seiner Öffnung (13) zum Schutz der im Gehäuse (12) angeordneten Steuer- oder Regeleinheit (11) abgedichtet ist und/oder die Steuer- oder Regeleinheit (11) im Gehäuse (12) eingegossen ist.

4. Elektrisch schaltbare Kraftfahrzeugverglasung (1) nach einem der vorhergehenden Ansprüche, **dadurch gekennzeichnet, dass** die Kraftfahrzeugverglasung (1) durch Zuführen eines elektrischen Signals, vorzugsweise einer elektrischen Leistung, über die an dem Scheibenhalter (17) der Kraftfahrzeugverglasung (1) angeordneten Leitung (10) beheizbar ist.

## Claims

1. Electrically switchable motor vehicle glazing (1), for example a side or rear window of a motor vehicle, in which at least one optical characteristic can be changed by supplying an electrical signal through a lead (10) that is arranged at a pane holder (17) of the motor vehicle glazing (1), wherein a control and regulation unit (11) for supplying the electrical signal is provided in a housing (12) that is arranged at the drive or cable drum housing (15) of a motor window lifter (3) in a stationary manner with respect to a motor vehicle body (2) for opening and closing the motor vehicle glazing (1), **characterized in that** the housing (12) is formed in one piece at the drive or cable drum housing (15) of the motor window lifter (3) for receiving the control and regulation unit (11).

2. Electrically switchable motor vehicle glazing (1) according to claim 1, **characterized in that**, in its interior, the housing (12) has at least one guide (14) for inserting and holding the control and regulation unit (11).

3. Electrically switchable motor vehicle glazing (1) according to claim 1 or 2, **characterized in that** the housing (12) is sealed in the area of its opening (13) for protecting the control and regulation unit (11) arranged in the housing (12) and/or the control and regulation unit (11) is molded in the housing (12).

4. Electrically switchable motor vehicle glazing (1) any of the preceding claims, **characterized in that** the motor vehicle glazing (1) can be heated by supplying an electrical signal, preferably of an electric power, through the lead (10) that is arranged at the pane holder (17) of the motor vehicle glazing (1).

## Revendications

1. Vitrage de véhicule automobile (1) commutable électriquement, par exemple une vitre latérale ou une vitre arrière d'un véhicule automobile, avec lequel au moins une caractéristique optique peut être modifiée en acheminant un signal électrique par le biais d'une ligne (10) disposée dans un porte-vitre (17) du vitrage de véhicule automobile (1), une unité de commande ou de régulation (11) destinée à acheminer le signal électrique se trouvant dans un boîtier (12) qui est monté en position fixe par rapport à une carrosserie de véhicule automobile (2) sur un boîtier d'entraînement ou de tambour à câble (15) d'un lève-vitre de véhicule automobile (3), **caractérisé en ce que** le boîtier (12) est façonné d'un seul tenant sur le boîtier d'entraînement ou de tambour à câble (15) du lève-vitre de véhicule automobile (3) en vue d'accueillir l'unité de commande ou de régulation (11).

2. Vitrage de véhicule automobile (1) commutable électriquement selon de la revendication 1, **caractérisé en ce que** le boîtier (12) possède à l'intérieur de celui-ci au moins un guide (14) servant à l'introduction et au maintien de l'unité de commande ou de régulation (11).

3. Vitrage de véhicule automobile (1) commutable électriquement selon l'une des revendications 1 ou 2, **caractérisé en ce que** le boîtier (12) est rendu étanché dans la zone de son ouverture (13) en vue de la protection de l'unité de commande ou de régulation (11) disposée dans le boîtier (12) et/ou l'unité de commande ou de régulation (11) est surmoulée dans le boîtier (12).

4. Vitrage de véhicule automobile (1) commutable électriquement selon l'une des revendications précédentes, **caractérisé en ce que** le vitrage de véhicule automobile (1) peut être chauffé en acheminant un signal électrique, de préférence une puissance électrique, par le biais d'une ligne (10) disposée dans le porte-vitre (17) du vitrage de véhicule automobile (1).
